# EUROPÄISCHE PATENTANMELDUNG

(11) **EP 4 507 278 A1**
(43) Veröffentlichungstag der Anmeldung: **12.02.2025**
(21) Anmeldenummer: 23191047.2
(22) Anmeldetag: 11.08.2023
(51) Int. Cl.: H04L 67/565, G06N 3/08

(54) **COMPUTERIMPLEMENTIERTES VERFAHREN UND WERKZEUG ZUM STEUERN EINES AUSTAUSCHS VON DATEN ZWISCHEN COMPUTERSYSTEMEN SOWIE COMPUTERSYSTEM**

(71) Anmelder: Siemens Aktiengesellschaft, 80333 München (DE)
(72) Erfinder: Weiss, Johannes, 96170 Lisberg (DE)
(74) Vertreter: Siemens Patent Attorneys

(57) **Zusammenfassung**

Um Daten (DT) zwischen einem sendenden Computersystem (CS_{S}) und einem empfangenden Computersystem (CS_{E}) über zueinander inkompatible Schnittstellen, eine CS_{S}-Sendeschnittstelle (SS) zum Datentransport in einem Sendedatenformat (SDTF) und eine CS_{E}-Empfangsschnittstelle (ES) zum in einem Empfangsdatenformat (EDTF), zu übertragen, so dass die ausgetauschten Daten auf Empfangsseite bei proprietären, nicht standardisierten Schnittstellen schneller verarbeitet werden können, wird es vorgeschlagen, <**A**> durch eine Datentransformation aus einer Vielzahl "m" von transportierten, sendedatenformatbezogenen Dateninformationen (DTI_{SDTF,1}, ..., DTI_{SDTF,m}) eine zu dieser Vielzahl "m" korrespondierende Anzahl von in das Empfangsdatenformat (EDTF) überführte Dateninformationen (DTI_{SDTF,1}, ..., DTI_{SDTF,m}) zu erzeugen (ezg), <**B**> die transportierten und erzeugten Dateninformationen zu protokollieren (prt), <**C**> mit den protokollierten Dateninformationen ein Neuronales Netzwerk (NNW) zur Generierung eines Datentransformationsmusters (DTMU) zu trainieren (trn), <**D**> das trainierte Neuronale Netzwerk (NNW) durch Anwendung des generierten Datentransformationsmusters für eine "m+x"-te transportierte, sendedatenformatbezogenen Dateninformation (DTI_{SDTF,m+x}) zur Erzeugung einer potenziellen, in das Empfangsdatenformat überführten Dateninformation (DTI_{SDTF,pot}) auszuführen (afh), <**E**> für die "m+x"-te sendedatenformatbezogenen Dateninformation eine "m+x"-te, in das Empfangsdatenformat überführte Dateninformation (DTI_{SDTF,m+x}) zu erzeugen (ezg) und <**F**> die potenzielle Dateninformation mit der "m+x"-ten empfangsdatenformatbezogenen Dateninformation zu vergleichen (vgl), wobei bei Übereinstimmung das Neuronale Netzwerk für die Erzeugung einer empfangsdatenformatbezogenen Dateninformation benutzt wird.

## Beschreibung

Die Erfindung betrifft ein computerimplementiertes Verfahren zum Steuern eines Austauschs von Daten zwischen Computersystemen gemäß dem Oberbegriff des Patentanspruches 1, ein computerimplementiertes Werkzeug zum Steuern eines Austauschs von Daten zwischen Computersystemen gemäß dem Oberbegriff des Patentanspruches 3 sowie Computersystem gemäß dem Oberbegriff des Patentanspruches 5.

Als Computersystem wird allgemein eine technische Vorrichtung für die digitale Informationsverarbeitung verstanden. Dabei umfasst der Begriff einerseits die Gesamtheit aller externen und internen Komponenten (betreffend Hard- und Software) eines einzelnen Rechners und andererseits einen Verbund, ein Netzwerk aus mehreren Rechnern bzw. Computern, die individuell gesteuert werden und auf gemeinsam genutzte Daten und Geräte zugreifen können.

Typische, dieser Definition folgende Computersysteme sind beispielsweise ein Personal Computer, ein Notebook, ein Tablet, eine Workstation, Embedded Systeme (z.B. PC's im industriellen Umfeld), Mainframes (Großrechner), Hochleistungssysteme (z.B. Server, Client-Server-basierte Systemarchitekturen) Quantencomputer etc.

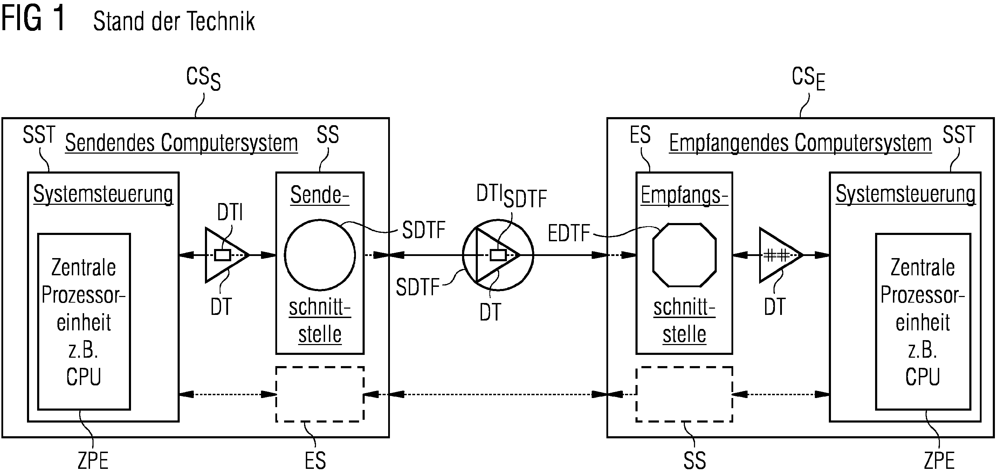

FIGUR 1 zeigt ein typisches, allgemein bekanntes Szenario zum Austauschen von Daten DT zwischen zwei Computersystemen, einem sendenden Computersystem CS_{S} mit einer Systemsteuerung SST, die z.B. eine als CPU (Central Processing Unit) ausgebildete Zentrale Prozessoreinheit ZPE aufweist, und einer mit der Systemsteuerung SST verbundenen Sendeschnittstelle SS sowie einem empfangenden Computersystem CS_{E} mit einer Systemsteuerung SST, die z.B. wieder eine als CPU (Central Processing Unit) ausgebildete Zentrale Prozessoreinheit ZPE aufweist, und einer mit der Systemsteuerung SST verbundenen Empfangsschnittstelle ES, wobei die Sendeschnittstelle SS und die Empfangsschnittstelle ES zueinander inkompatibel sind.

Die Daten DT werden dabei über die zueinander inkompatiblen Schnittstellen SS, ES derart übertragen, dass die Daten DT über die Sendeschnittstelle SS in einem Sendedatenformat SDTF und die Daten DT über die Empfangsschnittstelle ES in einem Empfangsdatenformat EDTF transportiert werden.

Mit den Daten DT wird dabei ein Dateninhalt in Form von Dateninformationen DIF transportiert, den bzw. die es auf der empfangenden Seite trotz der Inkompatibilität der Schnittstellen SS, ES und der verschiedenen Datenformate SDTF, EDTF zu erkennen gilt. In dem dargestellten Szenario wird der Dateninhalt bzw. die Dateninformation DTI von der Empfangsschnittstelle ES nicht erkannt (dargestellt in der FIGUR 1 durch zwei ##-Zeichen als Dateninhalt).

In der FIGUR 1 ist eine Datenübertragungsrichtung von dem sendenden Computersystem CS_{S} zu dem empfangenden Computersystem CS_{E} dargestellt.

Es sei an dieser Stelle angemerkt, dass auch eine entgegengesetzte Datenübertragungsrichtung grundsätzlich in Frage kommt. So ist auch eine Datenübertragung von dem empfangenden Computersystem CS_{E} zu dem sendenden Computersystem CS_{S} möglich. Aus diesem Grund weist das empfangende Computersystem CS_{E} neben der Empfangsschnittstelle ES auch die Sendeschnittstelle SS auf. Entsprechendes gilt für das sendende Computersystem CS_{S}, das neben der bereits erwähnten Sendeschnittstelle SS für die entgegengesetzte Datenübertragungsrichtung die Empfangsschnittstelle ES aufweist. In der FIGUR 1 ist dieses Szenario in der entgegengesetzte Datenübertragungsrichtung durch die gestrichelt dargestellte Sendeschnittstelle SS in dem empfangenden Computersystem CS_{E} und die gestrichelt dargestellte die Empfangsschnittstelle ES in dem sendenden Computersystem CS_{S} angedeutet.

Unabhängig von der Datenübertragungsrichtung muss es also stets das Ziel sein, dass der mit dem Datenaustausch zwischen den beiden Computersystemen CS_{S}, CS_{E} mit den zueinander inkompatiblen Schnittstellen SS, ES, die keinem Standard folgend jeweils entsprechend proprietär ausgebildet sind, und den deshalb verschiedenen Datenformaten SDTF, EDTF jeweils transportierte Dateninhalt bzw. die Dateninformation DTI inhaltlich von beiden Computersystemen CS_{S}, CS_{E} verarbeitet werden kann.

Beispiel: Der transportierte Dateninhalt bzw. die Dateninformation beschreibt einen Sensor, der in der Lage ist, eine Temperatur auszulesen und zu versenden.

Die Informationsobjekte können nun beispielsweise, wie in der im Annex angehängten grafischen Darstellung (Bild) gezeigt, aussehen.

In dem Beispiel ist es vorgesehen, dass ein Computersystem CS1 die Information 37 Grad Celsius der Messung von Sensor A an ein Computersystem CS2 überträgt. Das Computersystem CS2 versteht allerdings nichts von einem "DataObject" des Computersystem CS1 und modelliert Temperaturen ganz anders. Inhaltlich ist jedoch die Information "37 Grad Celsius von Sensor A" identisch.

Um das angegeben Ziel gemäß dem aufgezeigten Beispiel zu erreichen, sind folgende zwei Lösungsvorschläge bekannt.

Im einfachsten Fall gemäß einem ersten Lösungsvorschlag wird ein Adapter entwickelt, der als Mediator zwischen den, ersten Lösungsvorschlag beiden Computersystemen dient. Dieser Adapter enthält Programmlogik, die ein Informationsmodell des Computersystems CS1 in ein Informationsmodell Computersystems CS2 übersetzt.

Nachteil dieses ersten Lösungsvorschlags: Ein Adapter hilft hier immer nur punktuell (Punkt-zu-Punkt), da er von einer konkreten Schnittstelle in eine andere konkrete Schnittstelle übersetzt. Der Adapter muss entwickelt und getestet werden. Der Adapter unterliegt einer Veränderung, sobald sich eine der Schnittstellen der Computersysteme CS1, CS2 ändert. D.h. der Adapter muss entsprechend immer aktualisiert werden.

Ein zweiter Lösungsvorschlag ist, dass sich die Computersysteme CS1, CS2 auf ein Datenaustauschformat einigen. Die Definition eines solchen Formats ist sehr aufwändig und dauert sehr lange. Jedes beteiligte Computersystem CS1, CS2 muss sich dann entsprechend der Konvention unterwerfen. Solche Standardisierungen werden häufig bei Schnittstellen angewendet, wo häufig und viele Daten ausgetauscht werden und sich der Aufwand für eine Standardisierung entsprechend lohnt. In der Praxis sind jedoch viele Schnittstellen nicht standardisiert.

In der nachveröffentlichten EP-Patentanmeldung (Anmeldenummer 22192152.1) der Anmelderin ist beschrieben, wie zwei Computersysteme Daten über ihre eigenen, technisch inkompatiblen, Schnittstellen auf Basis einer Informationsübersetzung mittels semantischer Annotation austauschen können.

Dieses Vorgehen hat bezogen auf die Ablaufgeschwindigkeit des Datenaustausches Nachteile im Vergleich zur Entwicklung und Bereitstellung eines dedizierten Adapters gemäß dem ersten Lösungsvorschlag zwischen zwei konkreten Schnittstellen. Der Nachteil der schlechteren Ablaufgeschwindigkeit entsteht durch folgende Verarbeitungsschritte:
1. Daten einer Quellschnittstelle werden semantisch annotiert.
2. Semantische Regeln werden ausgeführt, um Daten zu übersetzen und zu transformieren.
3. Daten werden anhand der semantischen Annotation einer Zielschnittstelle ausgegeben.

Die typische Verarbeitungszeit über diese 3 Schritte liegt bei durchschnittlich ca. 60 Millisekunden (Anmerkung: Der konkrete Zeitbedarf hängt vom Umfang der Datenpakete ab und der Komplexität der semantischen Regeln. Die hier angesetzten 60 Millisekunden sind ein Fallbeispiel). Das heißt im Umkehrschluss, dass pro Sekunde kaum mehr als 16 Datenpakete ausgetauscht werden können.

Bislang wird es akzeptiert, dass die Verarbeitung der Daten bei einem derartigen Datenaustausch eine entsprechende Zeit benötigt. Um einen nötigen Durchsatz von Datenpaketen zu erreichen, werden entsprechend viele Hardware-Ressourcen zur Verfügung gestellt, um mehrere Transformationsprozesse mit oben beschriebener Lösung parallel auszuführen. Auf diese Weise erreicht man pro parallele Verarbeitung durchschnittlich 16 Datentransformationen pro Sekunde.

Die der Erfindung zugrundeliegende Aufgabe besteht darin, ein computerimplementiertes Verfahren und Werkzeug zum Steuern eines Austauschs von Daten zwischen Computersystemen sowie ein Computersystem anzugeben, bei dem die ausgetauschten Daten auf Empfangsseite selbst bei der Verwendung von proprietären, nicht standardisierten Schnittstellen der am Datenaustausch beteiligten Computersysteme schneller verarbeitet werden können.

Die vorstehend bezeichnete Aufgabe wird ausgehend von dem im Oberbegriff des Patentanspruchs 1 definierten computerimplementierte Verfahren durch die im Kennzeichen des Patentanspruches 1 angegebenen Merkmale gelöst.

Weiterhin wird diese Aufgabe ausgehend von dem im Oberbegriff des Patentanspruchs 3 definierten computerimplementierten Werkzeug durch die im Kennzeichen des Patentanspruches 3 angegebenen Merkmale gelöst.

Darüber hinaus wird diese Aufgabe von dem im Oberbegriff des Patentanspruchs 5 definierten Computersystem durch die im Kennzeichen des Patentanspruches 5 angegebenen Merkmale gelöst.

Die der Erfindung zugrundeliegende Idee gemäß der in den Ansprüchen 1, 3 und 5 jeweils angegebenen technischen Lehre besteht darin, wenn Daten zwischen einem sendenden Computersystem und einem empfangenden Computersystem über zueinander inkompatible Schnittstellen, eine Sendeschnittstelle des sendenden Computersystems zum Transport der Daten in einem Sendedatenformat und eine Empfangsschnittstelle des empfangenden Computersystems zum Transport der Daten in einem Empfangsdatenformat, übertragen werden, dass
**1)** durch eine Datentransformation aus einer Vielzahl "m mit mEN" von mit der Übertragung der Daten in dem Sendedatenformat transportierten Dateninformationen eine zu dieser Vielzahl "m" korrespondierende Anzahl von in das Empfangsdatenformat überführte Dateninformationen erzeugt wird, die zu den jeweils korrespondierenden, sendedatenformatbezogenen Dateninformationen äquivalent sind,
**2)** die sendedatenformatbezogenen Dateninformationen und die erzeugten, empfangsdatenformatbezogenen Dateninformationen protokolliert werden,
**3)** mit den protokollierten, sendeformatbezogenen Dateninformationen und empfangsformatbezogenen Dateninformationen ein Neuronales Netzwerk zur Generierung eines Datentransformationsmusters trainiert wird,
**4)** das trainierte Neuronale Netzwerk durch Anwendung des generierten Datentransformationsmusters für eine "m+x mit x∈**N"**-te, in dem Sendedatenformat transportierte Dateninformation zur Erzeugung einer potenziellen, in das Empfangsdatenformat überführten Dateninformation ausgeführt wird,
**5)** durch die Datentransformation aus der "m+x"-ten, sendedatenformatbezogenen Dateninformation eine "m+x"-te, in das Empfangsdatenformat überführte Dateninformation erzeugt wird,
**6)** die potenzielle, empfangsdatenformatbezogene Dateninformation mit der "m+x"-ten, empfangsdatenformatbezogenen Dateninformation verglichen wird, wobei
**6.1**) wenn die potenzielle, empfangsdatenformatbezogene Dateninformation mit der "m+x"-ten, empfangsdatenformatbezogenen Dateninformation syntaktisch oder semantisch nicht übereinstimmt, für eine weitere Vielzahl "m' mit m'∈N" von mit der Übertragung der Daten in dem Sendedatenformat transportierten Dateninformationen die Punkte **1**) bis **6.1**) der vorstehend so lange durchgeführt werden, bis die potenzielle, empfangsdatenformatbezogenen Dateninformation mit einer für die weitere Vielzahl "m'" in das Empfangsdatenformat überführten Dateninformation syntaktisch und semantisch übereinstimmt und
**6.2**) ansonsten bei gegebener syntaktischer und semantischer Übereinstimmung das trainierte Neuronale Netzwerk entweder für eine nachfolgende "m+x+i mit i=1, 2, ..., n und n∈N"-te, in dem Sendedatenformat transportierte Dateninformation zur Erzeugung einer "m+x+i mit i=1, 2, ..., n und n∈N"-ten, in das Empfangsdatenformat überführten Dateninformation oder für eine nachfolgende "m`+x+i mit i=1, 2, ..., n und n∈N"-te, in dem Sendedatenformat transportierte Dateninformation zur Erzeugung einer "m'+x+i mit i=1, 2, ..., n und n∈N"-ten, in das Empfangsdatenformat überführten Dateninformation benutzt wird.

Die herkömmliche Ausführung der Datentransformation, z.B. gemäß der nachveröffentlichten, eingangs erwähnten EP-Patentanmeldung, benötigte bislang eine gewisse Datentransformationsgeschwindigkeit, die durch Ausführung mit dem Neuronalen Netzwerk erhöht werden kann, weil weniger CPU-Zyklen erforderlich sind. Es ergibt sich somit ein Geschwindigkeitsbonus und eine bessere Nachhaltigkeit, weil weniger Strom verbraucht wird, obwohl das Trainieren des Neuronalen Netzwerks eine zusätzliche Belastung ist und entsprechend auch CPU-Zyklen benötigt. Jedoch ist das Trainieren nur beim ersten Mal nötig und nur immer dann, wenn sich an den Schnittstellen etwas ändert. Der erhöhte Energiebedarf in der Trainingsphase wird entsprechend durch die nachhaltigere Ausführung des trainierten Modells wieder amortisiert bzw. überamortisiert.

Darüber hinaus, falls bei der herkömmlichen Datentransformation die verwendete Software nicht mehr gewartet werden kann, weil z.B. die Software-Technologie veraltet ist oder der Software-Code zu komplex ist, aber die verwendete Software aufgrund von Sicherheitslücken aktualisiert werden muss, bietet die der Erfindung zugrundeliegende Idee einen Ausweg, weil damit der ältere unsichere Code abgeschaltet werden kann.

Gegenüber einer z.B. wie in der nachveröffentlichten EP-Patentanmeldung offenbarten Datentransformationsarchitektur weist die gemäß der Erfindung vorgeschlagene Vorgehensweise bei der Datentransformation im Kontext des Austauschs von Daten zwischen Computersystemen folgende Vorteile auf:
- Die Verarbeitungskette mithilfe semantischer Technologien ist nicht mehr notwendig.
- Die Ausführgeschwindigkeit ist sehr viel schneller (deutlich erhöht) und ressourcenschonender, weshalb mehr Datentransformationen pro Sekunde durchgeführt werden können.
- Um die gleiche Menge an Datentransformationen pro Zeiteinheit zu realisieren, ist deutlich weniger Hardware notwendig, was zu Kosteneinsparung durch weniger Hardwarebedarf führt und einen Beitrag zur Nachhaltigkeit liefert, da weniger Energiebedarf für Datentransformation benötigt wird.
- Die Korrektheit der Datentransformation mittels des Neuronalen Netzwerks ist sichergestellt durch einen Lern- und Feedbackprozess, der durch den Vergleich in Punkt **6**) erzielt wird. Der Lern- und Feedbackprozess kann z.B. von Zeit zu Zeit wiederholt angewendet werden, um zu prüfen, ob das Neuronale Netzwerk noch funktioniert.

Die der Erfindung zugrundeliegende Idee lässt sich wie folgt skizzieren:
Bezüglich eines Datenaustauschs zwischen zwei Computersystemen, einem sendenden Computersystem CS1 und einem empfangenden Computersystem CS2, mit unterschiedlichen Schnittstellen für diesen Datenaustausch werden die gesendeten Daten von CS1 und nach einer Datentransformation die empfangenen Daten bei CS2 protokolliert. Anschließend wird ein Neuronales Netzwerk mit den protokollierten Daten trainiert, bevor das Neuronale Netzwerk ausgeführt wird, sodass es zu sendende Daten von CS1 in empfangende Daten von CS2 direkt übersetzt ohne Zuhilfenahme von syntaktischen und semantischen Werkzeugen.

An dieser Stelle ein Hinweis zum "Neuronalen Netzwerk":
Ein "Neuronales Netzwerk" ist als solches Stand der Technik und beschreibt eine Methode oder Vorgehensweise wie Computer künstliche Intelligenz entwickeln können. Ein "Neuronales Netzwerk" muss anhand vieler Eingabedaten trainiert werden. Es kann dann die gewünschte Ausgabe anhand von Eingabedaten selbst anhand der trainierten Information erzeugen. Bis das "Neuronale Netzwerk" fehlerfrei arbeitet muss es immer wieder Feedback bekommen, ob es richtig gearbeitet hat. Dadurch kann sich ein "Neuronales Netzwerk" immer weiter selbst optimieren. Es ist zu erwarten, dass das "Neuronale Netzwerk" mehrere hunderttausend, bis Millionen Datentransformationen benötigt, um so trainiert zu sein, damit es selbst fehlerfrei arbeitet.

Um das "Neuronale Netzwerk" zu trainieren, kann jede beliebige Datentransformation dem Training zugrunde gelegt werden. So z.B. auch die in der nachveröffentlichten EP-Patentanmeldung (Anmeldenummer 22192152.1) offenbarte Datentransformation.

Zuerst werden Daten gesammelt, die gesendeten Daten von CS1 und die durch Datentransformation empfangenen Daten bei CS2, und damit das "Neuronale Netzwerk" trainiert. Im nächsten Schritt wird das "Neuronale Netzwerk" ausgeführt, so dass es sendende Daten von CS1 entgegennimmt und Daten für CS2 erzeugt. In diesem Schritt, auch als Kontrollschritt bezeichnet, wird die dem Training zugrunde gelegte Datentransformation parallel weiter angewendet und es wird verglichen, ob das "Neuronale Netzwerk" die Daten für CS2 richtig erstellt hat. Dieser Kontrollschritt wird so lange durchgeführt, bis das "Neuronale Netzwerk" fehlerfrei arbeitet. Im letzten Schritt wird der Datenaustausch zwischen CS1 und CS2 nur noch über das "Neuronale Netzwerk" realisiert. Das "Neuronale Netzwerk" trainiert sich selbst und lernt, welche Informationen aus CS1 an welche Stelle für CS2 gesetzt werden müssen.

Es ist zu erwarten, dass die Verarbeitungszeit mithilfe des "Neuronalen Netzwerks" auf deutlich unter einer Millisekunde gedrückt werden kann.

Die der Erfindung zugrundeliegende Idee lässt sich auch weiterbilden. So ist gemäß der Weiterbildung der Erfindung durch die Ansprüche 2 und 4 von Vorteil, wenn bei sich ändernder Sendeschnittstelle des sendenden Computersystems, so dass die Daten in einem anderen Sendedatenformat transportiert werden, und/oder bei sich ändernder Empfangsschnittstelle, so dass die Daten in einem anderen Empfangsdatenformat transportiert werden, die Punkte **1**) bis **6.2**) für das andere Sendedatenformat und/oder das andere Empfangsdatenformat wiederholt werden.

Weitere Vorteile der Erfindung ergeben sich aus den Unteransprüchen 6 und 7 bezüglich des Computersystems gemäß Anspruch 5.

So ist gemäß Anspruch 6 vorteilhaft, wenn im Zuge eines Datenaustauschs zwischen Computersystemen vorhandenes, das Computersystem ein sendendes Computersystem zum Senden von Daten und/oder ein empfangendes Computersystem zum Empfangen von Daten ist.

Darüber hinaus ist gemäß Anspruch 7 vorteilhaft, wenn das Computersystem ein eigenständiges Computersystem ist, das unabhängig von einem im Zuge eines Datenaustauschs zwischen Computersystemen vorhandenen, sendenden Computersystem zum Senden von Daten und/oder einem im Zuge eines Datenaustauschs zwischen Computersystemen vorhandenen, empfangenden Computersystem zum Empfangen von Daten betrieben wird, aber zur Steuerung des Datenaustauschs sowohl dem sendenden Computersystem als auch dem empfangenden Computersystem zugeordnet wird.

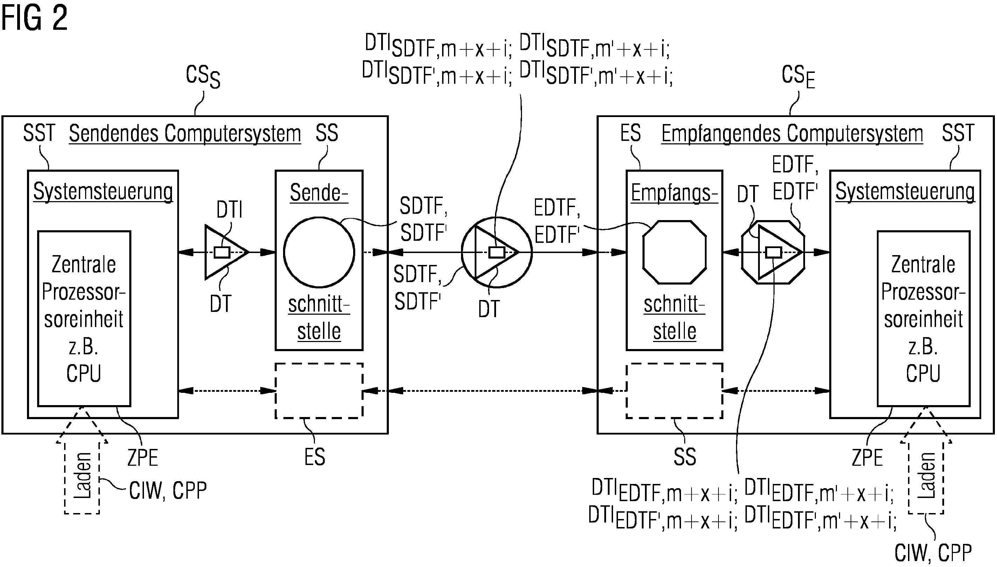

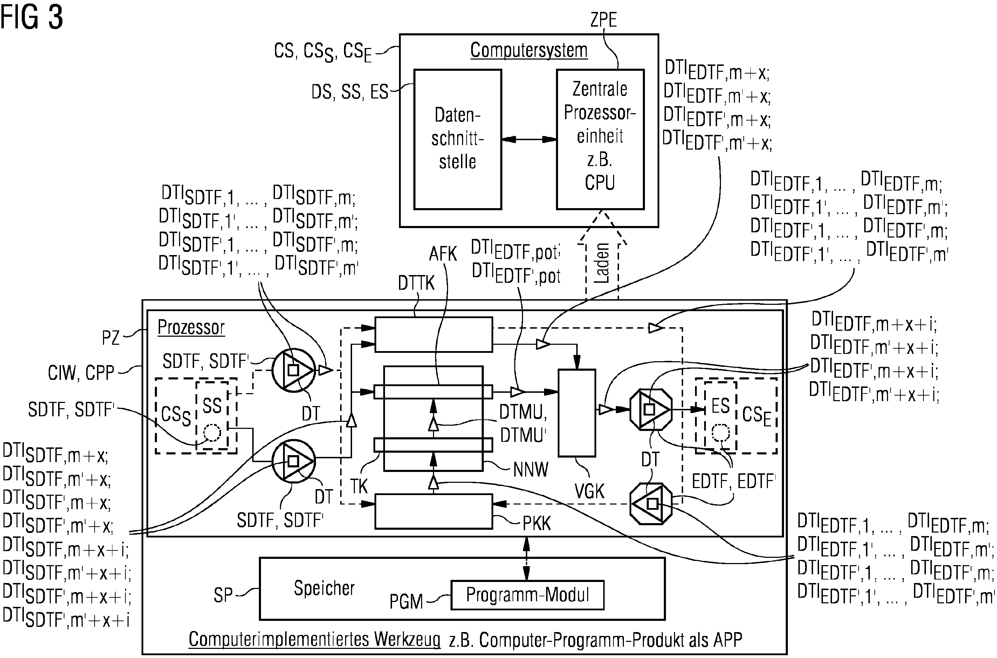

Weitere Vorteile der Erfindung ergeben sich aus der nachfolgenden Beschreibung eines Ausführungsbeispiels der Erfindung anhand der FIGUREN 2 und 3 erläutert. Diese zeigen:
FIGUR 2 ausgehend von der FIGUR 1 ein zur Zielerreichung modifiziertes Szenario zum Austauschen von Daten zwischen zwei Computersystemen,
FIGUR 3 ein computerimplementiertes Werkzeug zum Steuern des Austauschs der Daten zwischen den Computersystemen zur Zielerreichung des modifizierten Szenarios gemäß der FIGUR 2.

FIGUR 2 zeigt ein ausgehend von der FIGUR 1 ein zur Zielerreichung modifiziertes Szenario zum Austauschen von Daten DT zwischen zwei Computersystemen, einem sendenden Computersystem CS_{S} mit einer Systemsteuerung SST, die z.B. eine als CPU (Central Processing Unit) ausgebildete Zentrale Prozessoreinheit ZPE aufweist, und einer mit der Systemsteuerung SST verbundenen Sendeschnittstelle SS sowie einem empfangenden Computersystem CS_{E} mit einer Systemsteuerung SST, die z.B. wieder eine als CPU (Central Processing Unit) ausgebildete Zentrale Prozessoreinheit ZPE aufweist, und einer mit der Systemsteuerung SST verbundenen Empfangsschnittstelle ES, wobei die Sendeschnittstelle SS und die Empfangsschnittstelle ES zueinander inkompatibel sind.

Die Daten DT werden dabei über die zueinander inkompatiblen Schnittstellen SS, ES derart übertragen, dass die Daten DT über die Sendeschnittstelle SS in einem Sendedatenformat SDTF, SDTF' und die Daten DT über die Empfangsschnittstelle ES in einem Empfangsdatenformat EDTF, EDTF' transportiert werden.

Mit den Daten DT wird dabei ein Dateninhalt in Form von Dateninformationen transportiert, den bzw. die es auf der empfangenden Seite trotz der Inkompatibilität der Schnittstellen SS, ES und der verschiedenen Datenformate SDTF, SDTF`, EDTF, EDTF' zu erkennen gilt. Dateninformationsausgangspunkt bildet dabei in dem sendenden Computersystem CS_{S} eine Dateninformation DTI, die zwischen der Systemsteuerung SST und der Sendeschnittstelle SS transportiert wird. In der Sendeschnittstelle SS wird aus der Dateninformation DTI aufgrund des Sendedatenformat SDTF, SDTF`, in dem die Daten DT übertragen werden, eine Dateninformation DTI_{SDTF,m+x+i}; DTI_{SDTF,m'+x+i}; DTI_{SDTF',m+x+i}; DTI_{SDTF',m'+x+i}. Wie es zu dieser Dateninformation DTI_{SDTF,m+x+i}; DTI_{SDTF,m'+x+i}; DTI_{SDTF',m+x+i}; DTI_{SDTF',m'+x+i} kommt wird im nachfolgenden im Zusammenhang mit der Beschreibung von FIGUR 3 erläutert.

Gemäß dem Datenaustausch zwischen dem sendenden Computersystem CS_{S} und empfangenden Computersystem CS_{E} werden die Daten DT mit der DTI_{SDTF,m+x+i}; DTI_{SDTF,m'+x+i}; DTI_{SDTF',m+x+i}; DTI_{SDTF',m'+x+i} über die über die Empfangsschnittstelle ES an das empfangenden Computersystem CS_{E} übertragen.

Im Unterschied zu dem in der FIGUR 1 dargestellten Szenario, wo der Dateninhalt bzw. die Dateninformation DTI von der Empfangsschnittstelle ES nicht erkannt wird, wird in dem in der FIGUR 2 dargestellten modifizierten Szenario der Dateninhalt bzw. die Dateninformation DTI_{SDTF,m+x+i}; DTI_{SDTF,m'+x+i}; DTI_{SDTF',m+x+i}; DTI_{SDTF',m'+x+i} von der Empfangsschnittstelle ES erkannt und in eine das Empfangsdatenformat EDTF, EDTF' repräsentierende Dateninformation DTI_{EDTF,m+x+i}; DTI_{EDTF,m'+x+i}; DTI_{EDTF',m+x+i}; DTI_{EDTF',m'+x+i} überführt.

Das Erkennen und Überführen erfolgt dabei durch ein computerimplementiertes Werkzeug CIW, das beispielsweise ausgebildet als APP-basiertes Computer-Programm-Produkt zu diesem Zweck in die Zentrale Prozessoreinheit ZPE des Computersystems CS_{S}, CS_{E} geladen wird. Wie das computerimplementiertes Werkzeug CIW ausgebildet ist und funktioniert, wird weiter unten mit der Beschreibung von FIGUR 3 erläutert.

In der FIGUR 2 ist auch wieder eine Datenübertragungsrichtung von dem sendenden Computersystem CS_{S} zu dem empfangenden Computersystem CS_{E} dargestellt.

Es sei deshalb auch an dieser Stelle angemerkt, dass auch eine entgegengesetzte Datenübertragungsrichtung grundsätzlich in Frage kommt. So ist auch eine Datenübertragung von dem empfangenden Computersystem CS_{E} zu dem sendenden Computersystem CS_{S} möglich. Aus diesem Grund weist das empfangende Computersystem CS_{E} neben der Empfangsschnittstelle ES auch die Sendeschnittstelle SS auf. Entsprechendes gilt für das sendende Computersystem CS_{S}, das neben der bereits erwähnten Sendeschnittstelle SS für die entgegengesetzte Datenübertragungsrichtung die Empfangsschnittstelle ES aufweist. In der FIGUR 2 ist dieses Szenario in der entgegengesetzte Datenübertragungsrichtung auch wieder durch die gestrichelt dargestellte Sendeschnittstelle SS in dem empfangenden Computersystem CS_{E} und die gestrichelt dargestellte die Empfangsschnittstelle ES in dem sendenden Computersystem CS_{S} angedeutet.

Unabhängig von der Datenübertragungsrichtung wird durch das Erkennen der aus der Dateninformation DTI_{SDTF,m+x+i}; DTI_{SDTF,m'+x+i}; DTI_{SDTF',m+x+i}; DTI_{SDTF',m'+x+i} in das Empfangsdatenformat EDTF, EDTF' überführten Dateninformation DTI_{EDTF,m+x+i}; DTI_{EDTF,m'+x+i}; DTI_{EDTF',m+x+i}; DTI_{EDTF',m'+x+i} jenes Ziel erreicht, dass der mit dem Datenaustausch zwischen den beiden Computersystemen CS_{S}, CS_{E} mit den zueinander inkompatiblen Schnittstellen SS, ES, die keinem Standard folgend jeweils entsprechend proprietär ausgebildet sind, und den deshalb verschiedenen Datenformaten SDTF, SDTF', EDTF, EDTF' jeweils transportierte Dateninhalt bzw. die Dateninformation inhaltlich von beiden Computersystemen CS_{S}, CS_{E} verarbeitet werden kann.

FIGUR 3 zeigt das als das APP-basierte Computer-Programm-Produkt CPP ausgebildete computerimplementierte Werkzeug CIW zum Steuern des Austauschs der Daten DT zwischen den Computersystemen CS_{S}, CS_{E} zur Zielerreichung des modifizierten Szenarios gemäß der FIGUR 2.

Das computerimplementierte Werkzeug CIW enthält einen nicht-flüchtigen, lesbaren Speicher SP, in dem prozessorlesbare Steuerprogrammbefehle eines Programm-Moduls PGM zum Steuern des Austauschs der Daten DT zwischen den Computersystemen CS_{S}, CS_{E} gespeichert sind, und einen mit dem Speicher SP verbundenen Prozessor PZ, der die Steuerprogrammbefehle des Programm-Moduls PGM zum Steuern des Austauschs der Daten DT zwischen den Computersystemen CS_{S}, CS_{E} ausführt.

Das Programm-Modul PGM und der die Steuerprogrammbefehle des Programm-Moduls PGM zum Steuern des Austauschs der Daten DT zwischen den Computersystemen CS_{S}, CS_{E} ausführende Prozessor PZ sind derart ausgebildet, dass, wenn die Daten DT zwischen dem sendenden Computersystem CS_{S} und dem empfangenden Computersystem CS_{E} über zueinander inkompatible Schnittstellen SS, ES in dem Sendedatenformat SDTF gesendet und in dem Empfangsdatenformat EDTF empfangen werden [Anmerkung: Dieser Zustand ist in der FIGUR 3 in dem Prozessor PZ durch gepunktete Darstellungen der Computersystemen CS_{S}, CS_{E} angedeutet], folgende Schritte **1.** bis **15.** ausgeführt werden:
**1.** Mit der Datentransformationskomponente DTTK durch eine Datentransformation wird aus einer Vielzahl "m mit m∈N" von mit der Übertragung der Daten DT in einem ersten Sendedatenformat SDTF transportierten Dateninformationen DTI_{SDTF,1}, ..., DTI_{SDTF,m} eine zu dieser Vielzahl "m" korrespondierende Anzahl von in ein erstes Empfangsdatenformat EDTF überführte Dateninformationen DTI_{EDTF,1}, ..., DTI_{EDTF,m} erzeugt ezg. Die erzeugten, empfangsdatenformatbezogenen DTI_{EDTF,1}, ..., DTI_{EDTF,m} sind dabei zu den jeweils korrespondierenden, sendedatenformatbezogenen Dateninformationen DTI_{SDTF,1}, ..., DTI_{SDTF,m} äquivalent.
2. Mit einer Protokollierungskomponente PKK werden die sendedatenformatbezogenen Dateninformationen DTI_{SDTF,1}, ..., DTI_{SDTF,m} und die erzeugten, empfangsdatenformatbezogenen Dateninformationen DTI_{EDTF,1}, ..., DTI_{EDTF,m} protokolliert prt.
3. Mit einer Trainingskomponente TK wird mit den protokollierten, sendedatenformatbezogenen Dateninformationen DTI_{SDTF,1}, ..., DTI_{SDTF,m} und empfangsdatenformatbezogenen Dateninformationen DTI_{EDTF,1}, ..., DTI_{EDTF,m} ein Neuronales Netzwerk NNW zur Generierung eines ersten Datentransformationsmusters DTMU trainiert trn.
**4.** Mit einer Ausführungskomponente AFK wird das trainierte Neuronale Netzwerk NNW durch Anwendung des generierten ersten Datentransformationsmusters DTMU für eine "m+x mit x∈N"-te, in dem ersten Sendedatenformat SDTF transportierte Dateninformation DTI_{SDTF,m+x} zur Erzeugung einer ersten potenziellen, in das erste Empfangsdatenformat EDTF überführten Dateninformation DTI_{EDTF,pot} ausgeführt afh.
**5.** Mit der Datentransformationskomponente DTTK wird dann durch die Datentransformation aus der "m+x"-ten, sendedatenformatbezogenen Dateninformation DTI_{SDTF,m+x} eine "m+x"-te, in das erste Empfangsdatenformat EDTF überführte Dateninformation DTI_{EDTF,m+x} erzeugt ezg.
**6.** Mit einer Vergleichskomponente VGK wird die erste potenzielle, empfangsdatenformatbezogene Dateninformation DTI_{EDTF,pot} mit der "m+x"-ten, empfangsdatenformatbezogenen Dateninformation DTI_{EDTF,m+x} verglichen vgl.
**7.** Ergibt dieser Vergleich, dass die erste potenzielle, empfangsdatenformatbezogene Dateninformation DTI_{EDTF,pot} mit der "m+x"-ten, empfangsdatenformatbezogenen Dateninformation DTI_{EDTF,m+x} syntaktisch und semantisch übereinstimmt, so wird das trainierte Neuronale Netzwerk NNW für eine nachfolgende "m+x+i mit i=1, 2, ..., n und n∈N"-te, in dem ersten Sendedatenformat SDTF transportierte Dateninformation DTI_{SDTF,m+x+i} zur Erzeugung einer "m+x+i mit i=1, 2, ..., n und n∈N"-ten, in das erste Empfangsdatenformat EDTF überführten Dateninformation DTI_{EDTF,m+x+i} benutzt.
**8.** Ergibt dieser Vergleich jedoch, dass die erste potenzielle, empfangsdatenformatbezogene Dateninformation DTI_{EDTF,pot} mit der "m+x"-ten, empfangsdatenformatbezogenen Dateninformation DTI_{EDTF,m+x} syntaktisch oder semantisch nicht übereinstimmt, so werden iterativ die nachfolgenden Schritte **9.** bis **15.** so lange durchgeführt, bis eine syntaktische und semantische Übereinstimmung vorliegt.
**9.** Mit der Datentransformationskomponente DTTK durch die Datentransformation wird aus einer weiteren Vielzahl "m' mit m'∈N" von mit der Übertragung der Daten DT in dem ersten Sendedatenformat SDTF transportierten Dateninformationen DTI_{SDTF,1'}, ..., DTI_{SDTF,m'} eine zu dieser Vielzahl "m'" korrespondierende Anzahl von in dem ersten Empfangsdatenformat EDTF überführte Dateninformationen DTI_{EDTF',1'}, ..., DTI_{EDTF,m'} erzeugt ezg. Die erzeugten, empfangsdatenformatbezogenen DTI_{EDTF',1'}, ..., DTI_{EETF,m'} sind dabei zu den jeweils korrespondierenden, sendedatenformatbezogenen Dateninformationen DTI_{SETF,1'}, ..., DTI_{SDTE,m'} äquivalent.
**10.** Mit der Protokollierungskomponente PKK werden die sendedatenformatbezogenen Dateninformationen DTI_{SDTF,1'}, ..., DTI_{SDTF,m'} und die erzeugten, empfangsdatenformatbezogenen Dateninformationen DTI_{EDTF,1'}, ..., DTI_{EDTF,m'} protokolliert prt.
**11.** Mit der Trainingskomponente TK wird mit den protokollierten, sendedatenformatbezogenen Dateninformationen DTI_{SDTF,1'}, ..., DTI_{SDTF,m'} und empfangsdatenformatbezogenen Dateninformationen DTI_{EDTF,1'}, ..., DTI_{EDTF,m'} wieder das Neuronale Netzwerk NNW zur Generierung des ersten Datentransformationsmusters DTMU trainiert trn.
**12.** Mit der Ausführungskomponente AFK wird das trainierte Neuronale Netzwerk NNW durch Anwendung des generierten ersten Datentransformationsmusters DTMU für eine "m'+x mit xEN"-te, in dem ersten Sendedatenformat SDTF transportierte Dateninformation DTI_{SDTF,m'+x} zur Erzeugung der ersten potenziellen, in das erste Empfangsdatenformat EDTF überführten Dateninformation DTI_{EDTF,pot} ausgeführt afh.
**13.** Mit der Datentransformationskomponente DTTK wird dann durch die Datentransformation aus der "m'+x"-ten, sendedatenformatbezogenen Dateninformation DTI_{SDTF,m'+x} eine "m`+x"-te, in das erste Empfangsdatenformat EDTF überführte Dateninformation DTI_{EDTF,m'+x} erzeugt ezg.
**14.** Mit der Vergleichskomponente VGK wird die erste potenzielle, empfangsdatenformatbezogene Dateninformation DTI_{EDTF,pot} mit der "m'+x"-ten, empfangsdatenformatbezogenen Dateninformation DTI_{EDTF,m'+x} verglichen vgl.
**15.** Ergibt dieser Vergleich, dass die erste potenzielle, empfangsdatenformatbezogene Dateninformation DTI_{EDTF,pot} mit der "m'+x"-ten, empfangsdatenformatbezogenen Dateninformation DTI_{EDTF,m+x} syntaktisch und semantisch übereinstimmt, so wird das trainierte Neuronale Netzwerk NNW für eine nachfolgende "m`+x+i mit i=1, 2, ..., n und n∈N"-te, in dem ersten Sendedatenformat SDTF transportierte Dateninformation DTI_{SDTF,m'+x+i} zur Erzeugung einer "m`+x+i mit i=1, 2, ..., n und n∈N"-ten, in das erste Empfangsdatenformat EDTF überführten Dateninformation DTI_{EDTF,m'+x+i} benutzt.

Im Zuge der Durchführung der vorstehend angegebenen Schritte **1.** bis **15.** wird die aus der in dem ersten Sendedatenformat SDTF transportierten Dateninformation DTI_{SDTF,m+x+i}; DTI_{SDTF,m'+x+i} in das erste Empfangsdatenformat EDTF überführte Dateninformation DTI_{EDTF,m+x+i}; DTI_{EDTF,m'+x+1} erkannt und jenes Ziel erreicht, dass der mit dem Datenaustausch zwischen den beiden Computersystemen CS_{S}, CS_{E} mit den zueinander inkompatiblen Schnittstellen SS, ES, die keinem Standard folgend jeweils entsprechend proprietär ausgebildet sind, und den deshalb verschiedenen ersten Datenformaten SDTF, EDTF jeweils transportierte Dateninhalt bzw. die Dateninformation inhaltlich von beiden Computersystemen CS_{S}, CS_{E} verarbeitet werden kann.

Sollte sich jedoch - im Zuge einer vorteilhaften Weiterbildung der vorstehend beschriebenen Steuerung des Austauschs der Daten DT zwischen den Computersystemen CS_{S}, CS_{E} - zumindest eine der beiden Schnittstellen, die Sendeschnittstelle SS und/oder die Empfangsschnittstelle ES ändern, weil die Daten DT in einem anderen Sendedatenformat, einem zweiten Sendedatenformat SDTF`, transportiert werden und/oder die Daten DT in einem anderen Empfangsdatenformat, einem zweiten Empfangsdatenformat EDTF' transportiert werden, die Schritte **1.** bis **15.** für das zweite Sendedatenformat SDTF' und/oder das zweite Empfangsdatenformat EDTF' folgendermaßen wiederholt.

Das Programm-Modul PGM und der die Steuerprogrammbefehle des Programm-Moduls PGM zum Steuern des Austauschs der Daten DT zwischen den Computersystemen CS_{S}, CS_{E} ausführende Prozessor PZ sind dazu derart ausgebildet, dass, wenn die Daten DT zwischen dem sendenden Computersystem CS_{S} und dem empfangenden Computersystem CS_{E} über zueinander inkompatible Schnittstellen SS, ES in dem Sendedatenformat SDTF gesendet und in dem Empfangsdatenformat EDTF empfangen werden, folgende Schritte **1'.** bis **15'.** ausgeführt werden:
**1'.** Mit der Datentransformationskomponente DTTK durch eine Datentransformation wird aus einer Vielzahl "m mit m∈N**"** von mit der Übertragung der Daten DT in dem zweiten Sendedatenformat SDTF' transportierten Dateninformationen DTI_{SDTF',1}, ..., DTI_{SDTF',m} eine zu dieser Vielzahl "m" korrespondierende Anzahl von in ein zweites Empfangsdatenformat EDTF' überführte Dateninformationen DTI_{EDTF',1}, ..., DTI_{EDTF',m} erzeugt ezg. Die erzeugten, empfangsdatenformatbezogenen DTI_{EDTF',1}, ..., DTI_{EDTF',m} sind dabei zu den jeweils korrespondierenden, sendedatenformatbezogenen Dateninformationen DTI_{SDTF',1}, ..., DTI_{SDTF',m} äquivalent.
**2'.** Mit der Protokollierungskomponente PKK werden die sendedatenformatbezogenen Dateninformationen DTI_{SDTF',1}, ..., DTI_{SDTF',m} und die erzeugten, empfangsdatenformatbezogenen Dateninformationen DTI_{EDTF',1}, ..., DTI_{EDTF',m} protokolliert prt.
**3'.** Mit der Trainingskomponente TK wird mit den protokollierten, sendedatenformatbezogenen Dateninformationen DTI_{SDTF',1}, ..., DTI_{SDTF',m} und empfangsdatenformatbezogenen Dateninformationen DTI_{EDTF',1}, ..., DTI_{EDTF',m} wieder das Neuronale Netzwerk NNW zur Generierung eines zweiten Datentransformationsmusters DTMU' trainiert trn.
**4'.** Mit der Ausführungskomponente AFK wird das trainierte Neuronale Netzwerk NNW durch Anwendung des generierten zweiten Datentransformationsmusters DTMU' für eine "m+x mit x∈N"-te, in dem zweiten Sendedatenformat SDTF' transportierte Dateninformation DTI_{SETF',m+x} zur Erzeugung einer zweiten potenziellen, in das zweite Empfangsdatenformat EDTF' überführten Dateninformation DTI_{EDTF',pot} ausgeführt afh.
**5'.** Mit der Datentransformationskomponente DTTK wird dann durch die Datentransformation aus der "m+x"-ten, sendedatenformatbezogenen Dateninformation DTI_{SDTF',m+x} eine "m+x"-te, in das zweite Empfangsdatenformat EDTF überführte Dateninformation DTI_{EDTF',m+x} erzeugt ezg.
**6'.** Mit der Vergleichskomponente VGK wird die zweite potenzielle, empfangsdatenformatbezogene Dateninformation DTI_{EDTF',pot} mit der "m+x"-ten, empfangsdatenformatbezogenen Dateninformation DTI_{EDTF',m+x} verglichen vgl.
**7'.** Ergibt dieser Vergleich, dass die zweite potenzielle, empfangsdatenformatbezogene Dateninformation DTI_{EDTF',pot} mit der "m+x"-ten, empfangsdatenformatbezogenen Dateninformation DTI_{EDTF',m+x} syntaktisch und semantisch übereinstimmt, so wird das trainierte Neuronale Netzwerk NNW für eine nachfolgende "m+x+i mit i=1, 2, ..., n und n∈N"-te, in dem zweiten Sendedatenformat SDTF' transportierte Dateninformation DTI_{SDTF',m+x+i} zur Erzeugung einer "m+x+i mit i=1, 2, ..., n und n∈N"-ten, in das zweite Empfangsdatenformat EDTF' überführten Dateninformation DTI_{EDTF',m+x+i} benutzt.
**8'.** Ergibt dieser Vergleich jedoch, dass die zweite potenzielle, empfangsdatenformatbezogene Dateninformation DTI_{EDTF',pot} mit der "m+x"-ten, empfangsdatenformatbezogenen Dateninformation DTI_{EDTF',m+x} syntaktisch oder semantisch nicht übereinstimmt, so werden iterativ die nachfolgenden Schritte **9'.** bis **15'.** so lange durchgeführt, bis eine syntaktische und semantische Übereinstimmung vorliegt.
**9'.** Mit der Datentransformationskomponente DTTK durch die Datentransformation wird aus einer weiteren Vielzahl "m' mit m'∈N" von mit der Übertragung der Daten DT in dem zweiten Sendedatenformat SDTF' transportierten Dateninformationen DTI_{SDTF',1'}, ..., DTI_{SDTF',m'} eine zu dieser Vielzahl "m'" korrespondierende Anzahl von in dem zweiten Empfangsdatenformat EDTF' überführte Dateninformationen DTI_{EDTF',1'}, ..., DTI_{EDTF',m'} erzeugt ezg. Die erzeugten, empfangsdatenformatbezogenen DTI_{EDTF',1'}, ..., DTI_{EDTF',m'} sind dabei zu den jeweils korrespondierenden, sendedatenformatbezogenen Dateninformationen DTI_{SDTF',1'}, ..., DTI_{SDTF',m'} äquivalent.
**10'.** Mit der Protokollierungskomponente PKK werden die sendedatenformatbezogenen Dateninformationen DTI_{SDTF',1'}, ..., DTI_{SDTF',m'} und die erzeugten, empfangsdatenformatbezogenen Dateninformationen DTI_{EDTF',1'}, ..., DTI_{EDTF,m'} protokolliert prt.
**11'.** Mit der Trainingskomponente TK wird mit den protokollierten, sendedatenformatbezogenen Dateninformationen DTI_{SDTF',1'}, ..., DTI_{SDTF',m'} und empfangsdatenformatbezogenen Dateninformationen DTI_{EDTF',1'}, ..., DTI_{EDTF',m'} wieder das Neuronale Netzwerk NNW zur Generierung des zweiten Datentransformationsmusters DTMU' trainiert trn.
**12'.** Mit der Ausführungskomponente AFK wird das trainierte Neuronale Netzwerk NNW durch Anwendung des generierten zweiten Datentransformationsmusters DTMU' für eine "m'+x mit x∈N"-te, in dem zweiten Sendedatenformat SDTF' transportierte Dateninformation DTI_{SETF',m'+x} zur Erzeugung der zweiten potenziellen, in das zweite Empfangsdatenformat EDTF' überführten Dateninformation DTI_{EDTF',pot} ausgeführt afh.
**13'.** Mit der Datentransformationskomponente DTTK wird dann durch die Datentransformation aus der "m'+x"-ten, sendedatenformatbezogenen Dateninformation DTI_{SDTF',m'+x} eine "m`+x"-te, in das zweite Empfangsdatenformat EDTF' überführte Dateninformation DTI_{EDTF',m'+x} erzeugt ezg.
**14'.** Mit der Vergleichskomponente VGK wird die zweite potenzielle, empfangsdatenformatbezogene Dateninformation DTI_{EDTF',pot} mit der "m'+x"-ten, empfangsdatenformatbezogenen Dateninformation DTI_{EDTF',m'+x} verglichen vgl.
**15'.** Ergibt dieser Vergleich, dass die zweite potenzielle, empfangsdatenformatbezogene Dateninformation DTI_{EDTF',pot} mit der "m'+x"-ten, empfangsdatenformatbezogenen Dateninformation DTI_{EDTF',m+x} syntaktisch und semantisch übereinstimmt, so wird das trainierte Neuronale Netzwerk NNW für eine nachfolgende "m`+x+i mit i=1, 2, ..., n und n∈N"-te, in dem zweiten Sendedatenformat SDTF' transportierte Dateninformation DTI_{SDTE',m'+x+i} zur Erzeugung einer "m`+x+i mit i=1, 2, ..., n und n∈N"-ten, in das zweite Empfangsdatenformat EDTF' überführten Dateninformation DTI_{EDTF',m'+x+i} benutzt.

Im Zuge der Durchführung der vorstehend angegebenen Schritte **1'.** bis **15'.** wird auch für die bezüglich des zweiten Sendedatenformats SDTF' geänderte Sendeschnittstelle SS und/oder für die bezüglich des zweiten Empfangsdatenformats EDTF' geänderte Empfangsschnittstelle ES die aus der in dem zweiten Sendedatenformat SDTF' transportierten Dateninformation DTI_{SDTF',m+x+i}; DTI_{SDTF',m'+x+i} in das zweite Empfangsdatenformat EDTF' überführte Dateninformation DTI_{EDTF,m+x+i}; DTI_{EDTF,m'+x+i} erkannt und jenes Ziel erreicht, dass der mit dem Datenaustausch zwischen den beiden Computersystemen CS_{S}, CS_{E} mit den zueinander inkompatiblen Schnittstellen SS, ES, die keinem Standard folgend jeweils entsprechend proprietär ausgebildet sind, und den deshalb verschiedenen zweiten Datenformaten SDTF`, EDTF' jeweils transportierte Dateninhalt bzw. die Dateninformation inhaltlich von beiden Computersystemen CS_{S}, CS_{E} verarbeitet werden kann.

Das computerimplementierte Werkzeug CIW mit den dargestellten und vorstehend beschriebenen Komponenten kann jetzt, um den Austausch der Daten DT zwischen den Computersystemen CS_{S}, CS_{E} zur Zielerreichung des modifizierten Szenarios gemäß der FIGUR 2 steuern zu können, in ein beliebiges Computersystem CS geladen werden. Das Computersystem CS enthält wie die Computersysteme CS_{S}, CS_{E} die Zentrale Prozessoreinheit ZPE und eine Datenschnittstelle DS, die mit der Zentralen Prozessoreinheit ZPE verbunden ist. Das Laden des computerimplementierten Werkzeugs CIW erfolgt - wie bereits im Zusammenhang mit der Beschreibung der FIGUR 2 erwähnt - in die Zentrale Prozessoreinheit ZPE.

Das Computersystem CS kann z.B. ein am Datenaustausch nicht beteiligtes eigenständiges Computersystem sein. Aber natürlich auch - wie bereits im Zusammenhang mit der Beschreibung der FIGUR 2 erwähnt - das Computersystem CS_{S}, CS_{E}.

Das eigenständige Computersystem CS ist ein Computersystem, das unabhängig von dem im Zuge des Datenaustauschs zwischen Computersystemen vorhandenen, sendenden Computersystem CS_{S} zum Senden der Daten DT und/oder dem im Zuge des Datenaustauschs zwischen Computersystemen vorhandenen, empfangenden Computersystem CS_{E} zum Empfangen der Daten DT betrieben wird, aber zur Steuerung des Datenaustauschs sowohl dem sendenden Computersystem CS_{S} als auch dem empfangenden Computersystem CS_{E} zugeordnet wird.

## Patentansprüche

1. Computerimplementiertes Verfahren zum Steuern eines Austauschs von Daten zwischen Computersystemen, bei dem Daten (DT) zwischen einem sendenden Computersystem (CS_{S}) und einem empfangenden Computersystem (CS_{E}) über zueinander inkompatible Schnittstellen, eine Sendeschnittstelle (SS) des sendenden Computersystems (CS_{S}) zum Transport der Daten (DT) in einem Sendedatenformat (SDTF, SDTF`) und eine Empfangsschnittstelle (ES) des empfangenden Computersystems (CS_{E}) zum Transport der Daten (DT) in einem Empfangsdatenformat (EDTF, EDTF`), übertragen werden,
**gekennzeichnet durch**:
**a**) Erzeugen (ezg) durch eine Datentransformation aus einer Vielzahl "m mit m∈N" von mit der Übertragung der Daten (DT) in dem Sendedatenformat (SDTF, SDTF`) transportierten Dateninformationen (DTI_{SDTF,1}, ..., DTI_{SDTF,m}; DTI_{SDTF,1'}, ..., DTI_{SDTF,m'}; DTI_{SDTF',1}, ..., DTI_{SDTF',m}; DTI_{SDTF',1'}, ..., DTI_{SDTF',m'}) eine zu dieser Vielzahl "m" korrespondierende Anzahl von in das Empfangsdatenformat (EDTF, EDTF`) überführte Dateninformationen (DTI_{EDTF,1}, ..., DTI_{EDTF,m}; DTI_{EDTF,1'}, ..., DTI_{EDTF,m'}; DTI_{EDTF',1}, ..., DTI_{EDTF',m}; DTI_{EDTF',1'}, ..., DTI_{EDTF',m'}), die zu den jeweils korrespondierenden, sendedatenformatbezogenen Dateninformationen äquivalent sind,
**b)** Protokollieren (prt) der sendedatenformatbezogenen Dateninformationen und der erzeugten, empfangsdatenformatbezogenen Dateninformationen,
**c)** Trainieren (trn) eines Neuronalen Netzwerks (NNW) mit den protokollierten, sendedatenformatbezogenen Dateninformationen und empfangsdatenformatbezogenen Dateninformationen zur Generierung eines Datentransformationsmusters (DTMU, DTMU`),
**d)** Ausführen (afh) des trainierten Neuronalen Netzwerks (NNW) durch Anwendung des generierten Datentransformationsmusters (DTMU, DTMU') für eine "m+x mit x∈N"-te, in dem Sendedatenformat (SDTF, SDTF`) transportierte Dateninformation (DTI_{SDTF,m+x}; DTI_{SDTF,m'+x}; DTI_{SDTF',m+x}; DTI_{SDTF',m'+x}) zur Erzeugung einer potenziellen, in das Empfangsdatenformat (EDTF, EDTF') überführten Dateninformation (DTI_{EDTF,pot}; DTI_{EDTF',pot}),
**e)** Erzeugen (ezg) durch die Datentransformation aus der "m+x"-ten, sendedatenformatbezogenen Dateninformation einer "m+x"-te, in das Empfangsdatenformat (EDTF, EDTF`) überführten Dateninformation (DTI_{EDTF,m+x}; DTI_{EDTF,m'+x}; DTI_{EDTF',m+x}; DTI_{EDTF',m'+x}),
**f)** Vergleichen (vgl) der potenziellen, empfangsdatenformatbezogenen Dateninformation (DTI_{EDTF,pot}; DTI_{EDTF',pot}) mit der "m+x"-ten, empfangsdatenformatbezogenen Dateninformation, wobei
**f1)** wenn die potenzielle Dateninformation mit der "m+x"-ten, empfangsdatenformatbezogenen Dateninformation syntaktisch oder semantisch nicht übereinstimmt, für eine weitere Vielzahl "m` mit m'∈N" von mit der Übertragung der Daten (DT) in dem Sendedatenformat (SDTF, SDTF`) transportierten Dateninformationen (DTI_{SDTF,1'}, ..., DTI_{SDTF,m'}; DTI_{SDTF',1'}, ..., DTI_{SDTF',m'}) die Schritte **a**) bis **f1**) so lange durchgeführt werden, bis die potenzielle, empfangsdatenformatbezogene Dateninformation (DTI_{EDTF,pot}; DTI_{EDTF',pot}) mit einer für die weitere Vielzahl "m'" in das Empfangsdatenformat (EDTF, EDTF') überführten Dateninformation (DTI_{EDTF,m'+x}; DTI_{EDTF',m'+x}) syntaktisch und semantisch übereinstimmt und
**f2)** ansonsten bei gegebener syntaktischer und semantischer Übereinstimmung das trainierte Neuronale Netzwerk (NNW) entweder für eine nachfolgende "m+x+i mit i=1, 2, ..., n und n∈N"-te, in dem Sendedatenformat (SDTF, SDTF`) transportierte Dateninformation (DTI_{SDTF,m+x+i}; DTI_{SDTF',m+x+i}) zur Erzeugung einer "m+x+i mit i=1, 2, ..., n und n∈N"-ten, in das Empfangsdatenformat (EDTF, EDTF') überführten Dateninformation (DTI_{EDTF,m+x+i}; DTI_{EDTF',m+x+i}) oder für eine nachfolgende "m`+x+i mit i=1, 2, ..., n und n∈N"-te, in dem Sendedatenformat (SDTF, SDTF`) transportierte Dateninformation (DTI_{SDTF,m'+x+i}; DTI_{SDTF',m'+x+i}) zur Erzeugung einer "m`+x+i mit i=1, 2, ..., n und n∈N"-ten, in das Empfangsdatenformat (EDTF) überführten Dateninformation (DTI_{EDTF,m'+x+i}; DTI_{EDTF',m'+x+i}) benutzt wird.

2. Computerimplementiertes Verfahren nach Anspruch 1,
**dadurch gekennzeichnet, dass** bei sich ändernder Sendeschnittstelle (SS) des sendenden Computersystems (CS_{S}), so dass die Daten (DT) in einem anderen Sendedatenformat (SDTF`) transportiert werden, und/oder bei sich ändernder Empfangsschnittstelle (ES), so dass die Daten (DT) in einem anderen Empfangsdatenformat (EDTF`) transportiert werden, die Schritte **a**) bis **f2**) für das andere Sendedatenformat (SDTF`) und/oder das andere Empfangsdatenformat (EDTF`) wiederholt werden.

3. Computerimplementiertes Werkzeug (CIW), insbesondere ein als APP ausgebildetes Computer-Programm-Produkt (CPP), zum Steuern eines Austauschs von Daten zwischen Computersystemen, bei dem Daten (DT) zwischen einem sendenden Computersystem (CS_{S}) und einem empfangenden Computersystem (CS_{E}) über zueinander inkompatible Schnittstellen, eine Sendeschnittstelle (SS) des sendenden Computersystems (CS_{S}) zum Transport der Daten (DT) in einem Sendedatenformat (SDTF) und eine Empfangsschnittstelle (ES) des empfangenden Computersystems (CS_{E}) zum Transport der Daten (DT) in einem Empfangsdatenformat (EDTF), übertragen werden, mit einem nicht-flüchtigen, lesbaren Speicher (SP), in dem prozessorlesbare Steuerprogrammbefehle eines Programm-Moduls (PGM) zum Steuern des Austauschs der Daten (DT) zwischen den Computersystemen (CS_{S}, CS_{E}) gespeichert sind, und einem mit dem Speicher (SP) verbundenen Prozessor (PZ), der die Steuerprogrammbefehle des Programm-Moduls (PGM) zum Steuern des Austauschs der Daten (DT) zwischen den Computersystemen (CS_{S}, CS_{E}) ausführt, **dadurch gekennzeichnet, dass**
das Programm-Modul (PGM) und der die Steuerprogrammbefehle des Programm-Moduls (PGM) zum Steuern des Austauschs der Daten (DT) zwischen den Computersystemen (CS_{S}, CS_{E}) ausführende Prozessor (PZ) derart ausgebildet sind, dass
**a)** mit einer Datentransformationskomponente (DTTK) durch eine Datentransformation aus einer Vielzahl "m mit m∈N" von mit der Übertragung der Daten (DT) in dem Sendedatenformat (SDTF, SDTF`) transportierten Dateninformationen (DTI_{SDTF,1}, ..., DTI_{SDTF,m}; DTI_{SDTF,1'}, ..., DTI_{SDTF,m'}; DTI_{SDTF',1}, ..., DTI_{SDTF',m}; DTI_{SDTF',1'}, ..., DTI_{SDTF',m'}) eine zu dieser Vielzahl "m" korrespondierende Anzahl von in das Empfangsdatenformat (EDTF, EDTF`) überführte Dateninformationen (DTI_{EDTF,1}, ..., DTI_{EDTF,m}; DTI_{EDTF,1'}, ..., DTI_{EDTF,m'}; DTI_{EDTF',1}, ..., DTI_{EDTF',m}; DTI_{EDTF',1'}, ..., DTI_{EDTF',m'}) erzeugt (ezg) wird, die zu den jeweils korrespondierenden, sendedatenformatbezogenen Dateninformationen äquivalent sind,
**b)** mit einer Protokollierungskomponente (PKK) die sendedatenformatbezogenen Dateninformationen und die erzeugten, empfangsdatenformatbezogenen Dateninformationen protokolliert (prt) werden,
**c)** mit einer Trainingskomponente (TK) mit den protokollierten, sendedatenformatbezogenen Dateninformationen und empfangsdatenformatbezogenen Dateninformationen ein Neuronales Netzwerk (NNW) zur Generierung eines Datentransformationsmusters (DTMU, DTMU`) trainiert (trn) wird,
**d)** mit einer Ausführungskomponente (AFK) das trainierte Neuronale Netzwerk (NNW) durch Anwendung des generierten Datentransformationsmusters (DTMU, DTMU`) für eine "m+x mit x∈N"-te, in dem Sendedatenformat (SDTF, SDTF`) transportierte Dateninformation (DTI_{SDTF,m+x}; DTI_{SDTF,m'+x}; DTI_{SDTF',m+x}; DTI_{SDTF',m'+x}) zur Erzeugung einer potenziellen, in das Empfangsdatenformat (EDTF, EDTF') überführten Dateninformation (DTI_{EDTF,pot}; DTI_{EDTF',pot}) ausgeführt (afh) wird,
**e)** mit der Datentransformationskomponente (DTTK) durch die Datentransformation aus der "m+x"-ten, sendedatenformatbezogenen Dateninformation eine "m+x"-te, in das Empfangsdatenformat (EDTF, EDTF`) überführte Dateninformation (DTI_{EDTF,m+x}; DTI_{EDTF,m'+x}; DTI_{EDTF',m+x}; DTI_{EDTF',m'+x}) erzeugt (ezg) wird,
**f)** mit einer Vergleichskomponente (VGK) die potenzielle, empfangsdatenformatbezogene Dateninformation (DTI_{EDTF,pot}; DTI_{EDTF',pot}) mit der "m+x"-ten, empfangsdatenformatbezogenen Dateninformation verglichen (vgl) wird, wobei
**f1**) wenn die potenzielle Dateninformation mit der "m+x"-ten, empfangsdatenformatbezogenen Dateninformation syntaktisch oder semantisch nicht übereinstimmt, für eine weitere Vielzahl "m' mit m'∈N" von mit der Übertragung der Daten (DT) in dem Sendedatenformat (SDTF, SDTF`) transportierten Dateninformationen (DTI_{SDTF',1'}, ..., DTI_{SDTF,m'}; DTI_{SDTF',1'}, ..., DTI_{SDTF',m'}) die Schritte **a**) bis **f1**) so lange durchgeführt werden, bis die potenzielle, empfangsdatenformatbezogene Dateninformation (DTI_{EDTF,pot}; DTI_{EDTF',pot}) mit einer für die weitere Vielzahl "m'" in das Empfangsdatenformat (EDTF, EDTF') überführten Dateninformation (DTI_{EDTF,m'+x}; DTI_{EDTF',m'+x}) syntaktisch und semantisch übereinstimmt und
**f2)** ansonsten bei gegebener syntaktischer und semantischer Übereinstimmung das trainierte Neuronale Netzwerk (NNW) entweder für eine nachfolgende "m+x+i mit i=1, 2, ..., n und n∈N"-te, in dem Sendedatenformat (SDTF, SDTF`) transportierte Dateninformation (DTI_{SDTF,m+x+i}; DTI_{SDTF',m+x+i}) zur Erzeugung einer "m+x+i mit i=1, 2, ..., n und n∈N"-ten, in das Empfangsdatenformat (EDTF, EDTF') überführten Dateninformation (DTI_{EDTF,m+x+i}; DTI_{EDTF',m+x+i}) oder für eine nachfolgende "m`+x+i mit i=1, 2, ..., n und n∈N"-te, in dem Sendedatenformat (SDTF, SDTF`) transportierte Dateninformation (DTI_{SDTF,m'+x+i}; DTI_{SDTF',m'+x+i}) zur Erzeugung einer "m`+x+i mit i=1, 2, ..., n und n∈N"-ten, in das Empfangsdatenformat (EDTF) überführten Dateninformation (DTI_{EDTF,m'+x+i}; DTI_{EDTF',m'+x+i}) benutzt wird.

4. Computerimplementiertes Werkzeug (CIW) nach Anspruch 3,
**dadurch gekennzeichnet, dass**
das Programm-Modul (PGM) und der die Steuerprogrammbefehle des Programm-Moduls (PGM) zum Steuern des Austauschs der Daten (DT) zwischen den Computersystemen (CS_{S}, CS_{E}) ausführende Prozessor (PZ) derart ausgebildet sind, dass
bei sich ändernder Sendeschnittstelle (SS) des sendenden Computersystems (CS_{S}), so dass die Daten (DT) in einem anderen Sendedatenformat (SDTF`) transportiert werden, und/oder bei sich ändernder Empfangsschnittstelle (ES), so dass die Daten (DT) in einem anderen Empfangsdatenformat (EDTF`) transportiert werden, die Schritte **a**) bis **f2**) für das andere Sendedatenformat (SDTF`) und/oder das andere Empfangsdatenformat (EDTF`) wiederholt werden.

5. Computersystem (CS, CS_{S}, CS_{E}), mit einer als Central Processing Unit <CPU> bezeichnete Zentralen Prozessoreinheit (ZPE),
**gekennzeichnet durch**
ein computerimplementiertes Werkzeug (CIW) nach einem der Anspruche 3 bis 4, das zur Durchführung des Verfahrens nach einem der Ansprüche 1 bis 2 in die Zentrale Prozessoreinheit (ZPE) ladbar ist.

6. Computersystem (CS, CS_{S}, CS_{E}) nach Anspruch 5, **gekennzeichnet durch:**
ein im Zuge eines Datenaustauschs zwischen Computersystemen vorhandenes, sendendes Computersystem (CS_{S}) zum Senden von Daten (DT) und/oder ein im Zuge eines Datenaustauschs zwischen Computersystemen vorhandenes, empfangendes Computersystem (CS_{E}) zum Empfangen von Daten.

7. Computersystem (CS, CS_{S}, CS_{E}) nach Anspruch 5, **gekennzeichnet durch:**
ein eigenständiges Computersystem (CS), das unabhängig von einem im Zuge eines Datenaustauschs zwischen Computersystemen vorhandenen, sendenden Computersystem (CS_{S}) zum Senden von Daten (DT) und/oder einem im Zuge eines Datenaustauschs zwischen Computersystemen vorhandenen, empfangenden Computersystem (CS_{E}) zum Empfangen von Daten (DT) betrieben wird, aber zur Steuerung des Datenaustauschs sowohl dem sendenden Computersystem (CS_{S}) als auch dem empfangenden Computersystem (CS_{E}) zugeordnet wird.
